# FASCICULE DE BREVET EUROPEEN

(11) **EP 3 097 630 B1**
(45) Date de publication et mention de la délivrance du brevet: **30.03.2022**
(21) Numéro de dépôt: 15705637.5
(22) Date de dépôt: 15.01.2015
(51) Int. Cl.: H02K 5/14, H02K 11/00, H02K 23/18, H02K 23/66, H01R 39/59

(54) **PORTE-BALAIS POUR DEMARREUR DE VEHICULE AUTOMOBILE MUNI D'UN SYSTEME DE PROTECTION THERMIQUE ET DEMARREUR DE VEHICULE AUTOMOBILE CORRESPONDANT**
BÜRSTENHALTER FÜR EINEN KRAFTFAHRZEUGANLASSER MIT WÄRMESCHUTZSYSTEM UND ENTSPRECHENDER KRAFTFAHRZEUGANLASSER
BRUSH HOLDER FOR A MOTOR VEHICLE STARTER PROVIDED WITH A THERMAL PROTECTION SYSTEM AND CORRESPONDING MOTOR VEHICLE STARTER

(30) Priorité: 23.01.2014 FR 1450573
(43) Date de publication de la demande: 30.11.2016
(73) Titulaire: Valeo Equipements Electriques Moteur, 94046 Créteil Cedex (FR)
(72) Inventeur: GENTIL, Maximilien, 69960 Corbas (FR); NALIN, Marie-Ange, 01150 Chazey Sur Ain (FR); GOUGES, Julie, 75015 Paris (FR)
(74) Mandataire: Valeo Powertrain Systems
(86) Numéro de dépôt international: PCT/FR2015/050099
(87) Numéro de publication internationale: WO 2015/110743

(56) Documents cités:
- DE-A1- 10 059 680
- DE-A1-102010 030 870
- DE-U1-202010 002 664
- US-A1- 2007 108 864
- US-B1- 6 188 154
- US-B1- 6 188 154

## Description

L'invention porte sur un démarreur de véhicule automobile comportant un porte-balais muni d'un système de protection thermique,. L'invention trouve une application particulièrement avantageuse, mais non exclusive, avec les démarreurs de systèmes dits "stop and start" permettant l'arrêt et le redémarrage du moteur thermique du véhicule en fonction notamment des conditions de circulation.

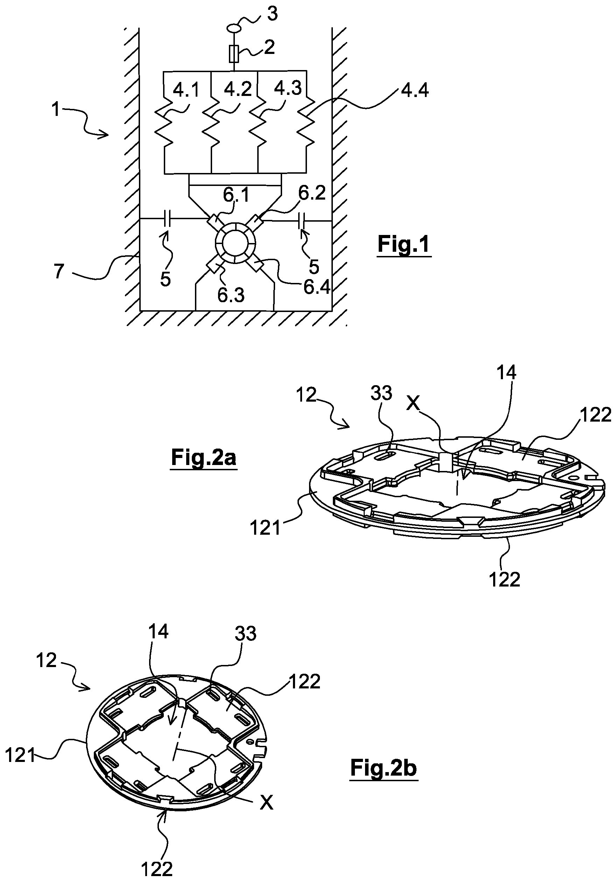

De façon connue en soi, les démarreurs, comprennent un moyen de protection contre les surintensités prenant la forme d'un ou plusieurs fusibles électriques et/ou d'un ou plusieurs disjoncteurs. La figure 1 montre ainsi un exemple de moteur 1 de démarreur comprenant un fusible 2 monté en série entre une borne d'alimentation 3 de la machine électrique 1 et des enroulements 4.1, 4.2, 4.3, 4.4 du stator dudit moteur.

Le fusible est destiné à fondre pour couper l'alimentation électrique du moteur lorsqu'il est parcouru par un courant prédéterminé maximum. Cela permet d'éviter de détériorer le démarreur ou son environnement à cause de la chaleur produite par une surintensité. Une telle surintensité apparait notamment dans le cas où le rotor du moteur est bloqué en rotation.

Lorsque la machine fonctionne à vide ou à faible charge (c'est-à-dire qu'elle fonctionne environ entre 0 et 25% de la charge nominale), la vitesse de rotation à vide du rotor entraîne également un échauffement de la machine électrique susceptible d'endommager le démarreur sur la durée. Cet échauffement, dû notamment au frottement mécanique entre les balais et le collecteur, se produit par exemple en phase de survitesse lorsque le pignon du démarreur entraîné par le moteur thermique tourne plus vite que l'arbre entraîné par le rotor du démarreur. Toutefois, dans ce cas, le courant traversant le fusible peut être trop faible pour engendrer une fusion du fusible 2 et cela même sur une longue durée.

Une solution consisterait donc à choisir un fusible apte à fondre à la fois lorsqu'un courant à vide traverse le fusible pendant une durée dépassant une première durée prédéterminée et lorsqu'un courant traverse la machine électrique tournante ayant son rotor bloqué pendant une durée dépassant une seconde durée prédéterminée. De tels fusibles sont toutefois beaucoup plus volumineux qu'un fusible de taille standard, ce qui rend leur intégration quasiment impossible dans le démarreur.

Le document FR2977408 décrit un système 5 de protection thermique compact permettant de couper l'alimentation électrique du moteur dans les deux cas précités (en cas de blocage et en cas de fonctionnement à faible charge). A cet effet, ce système 5 comporte un organe sensible à la chaleur et une lame de contact apte à établir, suite à une déformation de l'organe sensible à la chaleur, un court-circuit entre une polarité positive à laquelle sont reliés les balais positifs 6.1, 6.2 et la carcasse 7 du démarreur connectée à la masse avec les balais 6.3 et 6.4. Toutefois, un tel système de protection thermique implique la création de nouvelles pièces dont le montage à l'intérieur des cages à balais est relativement complexe à réaliser.

Le document US 6 188 154 B1 décrit dans une application différente que celles des démarreurs, un système de fixation sensible à la chaleur.

Les documents DE 10 2010 030870 A1, DE 100 59 680 A1, US 2007/108864 A1 et DE 20 2010 002664 U1 sont des documents qui illustre l'art antérieur de l'invention.

L'invention vise à remédier efficacement à cet inconvénient en proposant un démarreur de véhicule automobile selon la revendication 1.

Ainsi, l'invention permet d'établir un court-circuit entre la cage à balai de première polarité et la platine de support connectée à la deuxième polarité pour activer le moyen de protection thermique en cas de surchauffe sans avoir à ajouter de pièce supplémentaire à l'intérieur des cages à balais. On facilite ainsi le montage de l'ensemble porte-balais.

Selon une réalisation non revendiquée, ledit organe déformable est constitué par au moins une couche isolante recouvrant au moins en partie une plaque métallique de ladite platine de support.

Selon une réalisation non revendiquée, ladite couche isolante est surmoulée sur ladite plaque métallique.

Selon l'invention définie dans la revendication 1, ledit organe déformable est formé par une couche de matériau électriquement isolant recouvrant au moins en partie un système de fixation de ladite première cage à ladite platine de support.

Selon une réalisation, le système de fixation comporte au moins une patte recouverte au moins en partie d'une couche de matériau électriquement isolant.

Selon une réalisation, ledit moyen de déplacement est formé par un ressort à spirale monté sur un système de maintien dudit ressort appartenant à ladite première cage.

Selon une réalisation, le système de maintien est constitué par un pion issu d'une paroi de ladite première cage.

Selon une réalisation, ledit organe déformable est réalisé dans un matériau plastique.

Selon une réalisation, le matériau plastique est une matière thermoplastique telle qu'un polyamide PA4.6 ou PA6.6, ou un polypropylène PPS chargé en fibre de verre entre 40 et 50%.

Selon une réalisation, le matériau plastique est une matière thermodurcissable.

Selon une réalisation, ledit porte-balais comporte deux balais de première polarité et deux balais de deuxième polarité.

Selon une réalisation, la première polarité correspond à une polarité positive tandis que la deuxième polarité à laquelle est reliée électriquement ladite platine de support correspond à une masse du démarreur.

L'invention sera mieux comprise à la lecture de la description qui suit et à l'examen des figures qui l'accompagnent. Ces figures ne sont données qu'à titre illustratif mais nullement limitatif de l'invention.
La figure 1, déjà décrite, représente un schéma de principe d'un moteur électrique de démarreur de véhicule automobile muni d'un moyen de protection thermique;
Les figures 2a et 2b sont des représentations en perspective de la platine de support du porte-balais selon la présente invention suivant deux angles de vue différents;
Les figures 3a et 3b montrent respectivement des vues en perspective et de dessous d'un porte-balais selon la présente invention;
La figure 4 montre une vue en perspective d'une cage à balai utilisée avec le porte-balais selon la présente invention;
Les figures 5a et 5b sont des vues de côté d'une cage à balai et de la platine de support respectivement avant et après la déformation d'une couche isolante recouvrant la platine de support.

Les éléments identiques, similaires, ou analogues conservent la même référence d'une figure à l'autre.

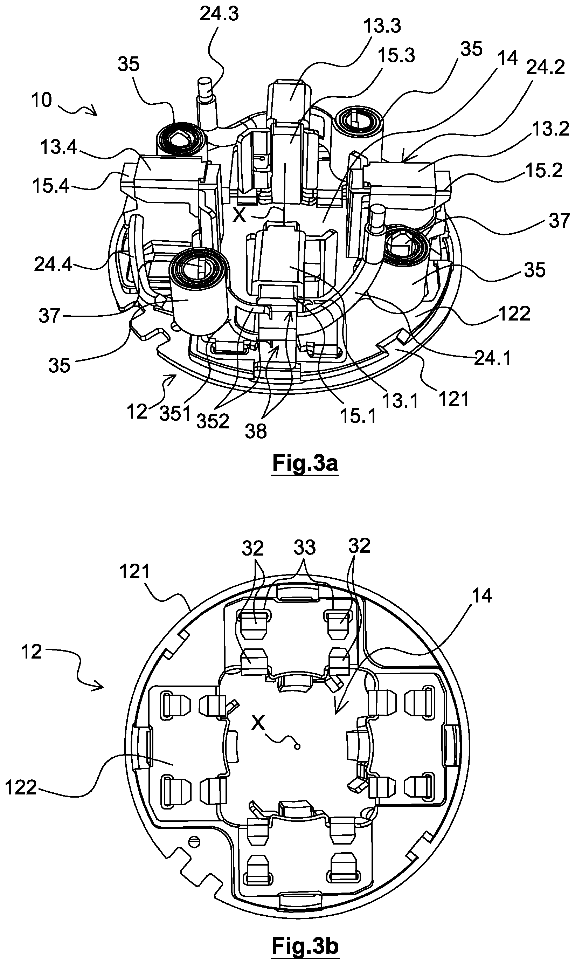

La figure 3a montre un porte-balais 10 selon l'invention pour démarreur de véhicule automobile. Ce porte-balais 10 comporte une platine de support 12 de forme sensiblement annulaire sur laquelle est fixé un ensemble de cages 13.1-13.4 servant chacune de logement à un balai 15.1-15.4. Un axe X de la platine de support 12 correspond à l'axe du porte-balais 10.

Comme cela est bien visible sur les figures 2a et 2b, la platine de support 12 est une pièce monobloc comportant une plaque métallique 121 et des couches surmoulées 122 réalisées de part et d'autre de la plaque métallique 121. Les couches surmoulées 122 sont réalisées au moyen d'une matière plastique assurant une bonne isolation électrique. Les couches surmoulées 122 protègent au moins en partie la face support de balais ainsi que la face opposée. Les couches surmoulées 122 recouvrent toutes les zones à risque de la platine 12, c'est-à-dire, toutes les zones où pourrait apparaître un court-circuit.

Les couches surmoulées 122 sont sensible à la chaleur et déformables à partir d'une température prédéterminée. La température prédéterminée correspond à une température au-delà de laquelle le démarreur et/ou son environnement seraient susceptibles d'être endommagés.

Différentes matières plastiques sont utilisables selon les applications et les contraintes qui s'imposent à celles-ci. Typiquement, la matière plastique utilisée pour les couches surmoulées 122 est une matière thermoplastique telle qu'un polyamide PA4.6 ou PA6.6 ou un polypropylène PPS chargé en fibre de verre entre 40 et 50%. Des matières thermodurcissables peuvent aussi être envisagées. La plaque métallique 121 est typiquement obtenue par emboutissage à partir d'un acier à découper tel que par exemple le FePO5.

La platine de support 12 et les cages 13.1-13.4 qu'elle porte viennent se fixer sur un capot (non représenté) formant un palier arrière pour l'arbre de rotor de la machine électrique. En outre, la partie centrale de la platine 12 comporte un orifice 14 par lequel l'ensemble qu'elle forme avec les cages à balais 13.1-13.4 et les balais 15.1-15.4 est monté autour de l'arbre rotor du démarreur.

Chaque balai 15.1-15.4 est monté à coulissement à l'intérieur d'une cage 13.1-13.4 laquelle est ouverte du côté de l'axe X pour permettre la mise en contact électrique des balais 15.1-15.4 avec des lames portées par un collecteur d'un rotor de machine électrique (non représenté).

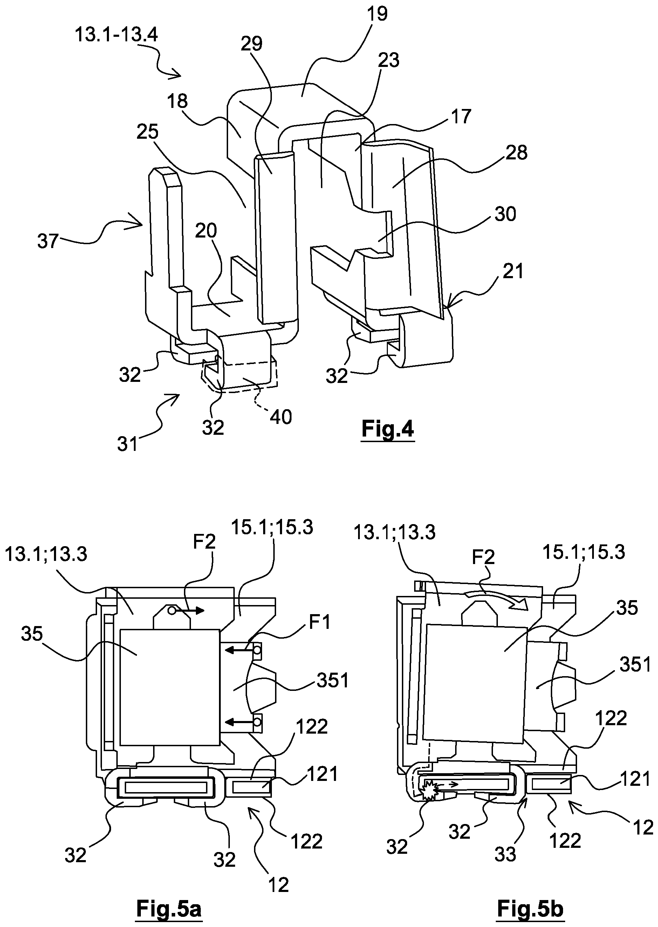

Plus précisément, comme cela est bien visible sur la figure 4, chaque cage 13.1-13.4 est réalisée par pliage d'une plaquette de tôle mince de manière à former sensiblement un oméga dont les branches d'extrémité sont fixées sur la platine 12. Chaque cage 13.1-13.4 comporte ainsi deux parois latérales 17, 18 parallèles en vis-à-vis reliées entre elles par une paroi supérieure 19. Les parois d'extrémité 20, 21 correspondant aux branches de l'oméga sont issues des bords inférieurs des parois latérales 17, 18 de la cage à balai 13.1-13.4. Une des parois latérales 17 présente une échancrure 23 pour autoriser le passage de la tresse 24.1-24.4 du balai logé dans la cage 13.1-13.4 correspondante. L'autre paroi latérale 18 présente une ouverture 25 pour autoriser le passage du bras du ressort correspondant. Du côté de la face débouchant du côté du collecteur, chaque cage à balai 13.1-13.4 pourra comporter des volets 28, 29 s'étendant de part et d'autre du balai pour éviter que les poussières générées par les frottements avec les lames du collecteur viennent altérer le fonctionnement du porte-balais 10. Un des volets 28 présente une creusure 30 située dans le prolongement de l'échancrure 23 pour autoriser le passage de la tresse 24.1-24.4 au plus proche du collecteur.

Chaque cage 13.1-13.4 comporte en outre un système 31 de fixation à la platine 12. Chaque système 31 de fixation est formé par deux paires de pattes 32. Les pattes 32 de chaque paires sont issues de deux bords en vis-à-vis des parois d'extrémité 20, 21. Comme on peut le voir sur la figure 3b, une patte 32 de chaque paire traverse la platine 12 de part en part via une ouverture 33 réalisée suivant son épaisseur. L'autre patte 32 de chaque paire est en appui contre un côté du contour intérieur de forme carrée délimitant l'orifice 14. Les pattes 32 de chaque paire sont rabattues l'une vers l'autre contre la platine 12. Alternativement, le système de fixation 31 comporte au moins un rivet traversant la platine 12 et une paroi d'extrémité 20, 21 de la cage à balai.

Par ailleurs, un ressort à spirales 35 associé à chaque cage 13.1-13.4 sollicite radialement le balai 15.1-15.4 correspondant vers des lames de contact du collecteur portées par un corps du collecteur en matière électriquement isolante, telle que de la matière plastique. Chaque ressort 35 est en l'occurrence monté autour d'un système de maintien 37 ici formé par un pion s'étendant axialement par rapport à l'axe X. Ce pion 37 est obtenu par pliage d'une des parois d'extrémité 20 de chaque cage 13.1-13.4.

Comme on peut le voir sur la figure 3a, chaque ressort 35 comporte une partie enroulée formée par une pluralité de spires. La partie enroulée se termine par un bras 351 destiné à venir en appui contre au moins une partie de la face arrière du balai 15.1-15.4. En l'occurrence, le bras 351 est terminé par deux parties 352 en contact contre des faces d'appui 38 situées de part et d'autre de la zone de fixation de la tresse 24.1-24.4 électriquement conductrice au balai. La zone de fixation entre la tresse 24.1-24.4 et le balai 15.1-15.4 est en retrait par rapport aux faces d'appui 38 afin de maximiser une distance fonctionnelle d'utilisation des balais 15.1-15.4.

Les balais 15.1-15.4 présentent des polarités alternées. Ainsi, les balais 15.1 et 15.3 de polarité positive sont reliés électriquement, via leur tresse respective 24.1, 24.3 à un fil d'alimentation issu du contacteur du démarreur. Ces balais 15.1 et 15.3 et leur cage 13.1 et 13.3 correspondante sont isolés électriquement de la polarité négative pour un bon fonctionnement du démarreur. Cette isolation est obtenue par les couches surmoulées 122 qui recouvrent les champs des ouvertures 33 recevant les pattes des cages de polarité positive 13.1, 13.3, ainsi qu'au moins en partie le contour intérieur de la platine 12. Les tresses 24.1 et 24.3 pourront également être recouvertes d'une gaine isolante.

Par ailleurs, les balais 15.2 et 15.4 de polarité négative destinés au retour de courant sont reliés électriquement à la masse de la machine au moyen de leur tresse respective 24.2, 24.4 soudée sur la plaque 121. Les tresses souples 24.1-24.4 sont avantageusement en cuivre ou en alliage de cuivre pour faciliter le soudage sur la plaque 121. De préférence, les ouvertures 33 recevant les pattes 32 des cages de polarité négative 13.2 et 13.4 ainsi que les zones du contour intérieur de la platine 12 en contact avec autres pattes 32 de ces cages 13.2, 13.4 ne sont pas isolées électriquement, en sorte qu'un contact électrique peut intervenir entre les cages de polarité négative 13.2, 13.4 et la plaque 121 via les pattes 32. Ce contact n'est pas nuisible au fonctionnement du démarreur, dans la mesure où il participe à l'établissement du contact électrique entre les pièces destinées à être au même potentiel, en l'occurrence le potentiel de masse dans cette application.

On décrit ci-après, en référence aux figures 5a et 5b, l'activation du fusible 2 du démarreur en cas de surchauffe pour assurer sa protection.

En fonctionnement normal, c'est-à-dire lorsque la température de déformation des couches surmoulées 122 n'a pas encore été atteinte, les pattes 32 des cages 13.1, 13.3 de polarité positive sont isolées par rapport à la platine 12 tandis que le ressort 35 qui est monté compressé applique un effort F1 contre le balai 15.1, 15.3 de manière à le maintenir constamment en contact avec les lames du collecteur. En réaction, le ressort 35 applique également un effort F2 sur la cage 13.1, 13.3 via le système de maintien 37. Les cages 13.1 et 13.3 ne peuvent toutefois pas se déplacer par rapport à la platine 12 du fait du caractère rigide de l'ensemble.

Lorsqu'il se produit une surchauffe causée par exemple par un fonctionnement à vide du démarreur pendant une longue durée, la température de déformation des couches isolantes 122 est atteinte. L'effort de réaction F2 exercé par le ressort 35 sur le système de maintien 37 engendre alors un pivotement des cages de polarité positive 13.1 et 13.3 par rapport à la platine 12, en sorte qu'au moins une patte 32 d'une cage 13.1, 13.3 vient en contact avec la plaque 121 reliée à la masse pour établir un court-circuit. Ce court-circuit engendre une augmentation considérable du courant parcourant la machine, ce qui a pour effet de faire fondre le fusible 2 du démarreur. L'invention permet ainsi d'assurer une protection du démarreur alors que le courant traversant la machine lors d'un fonctionnement à vide du moteur provoquant une surchauffe ne permet normalement pas de faire fondre le fusible 2.

L'homme du métier pourra bien entendu modifier la configuration du porte-balais 10 précédemment décrit sans sortir du cadre de l'invention, en respectant la portée des revendications annexées. Ainsi, en variante, comme cela est visible à la figure 4, les pattes 32 des cages de polarité positive 13.1, 13.3 sont recouvertes au moins en partie d'une couche isolante 40 sensible à la chaleur. Cette couche 40 formant un organe déformable pourra être réalisée dans le même type de matériau que celui des couches surmoulées 122.

Alternativement, c'est la platine 12 qui est déplacée vers les cages de polarité positive 13.1, 13.3 suite à une déformation des couches isolantes 122. Alternativement, la platine 12 est reliée électriquement à la polarité positive.

En variante, les couches 122 prennent la forme de rondelles isolantes rapportées qui sont fixées de part et d'autre de la plaque métallique 121. Le ressort à spirales 35 peut également être remplacé par un ressort cylindrique prenant appui sur le capot pour pousser le balai correspondant contre les lames du collecteur.

En variante, le porte-balais 10 comporte plus de quatre balais 15.1-15.4, chaque balai pouvant par exemple être associé à un autre balai positionné du côté opposé de la platine 12.

Le porte-balais 10 est ici un porte-balais de machine d'un démarreur de véhicule automobile.

## Revendications

1. Démarreur de véhicule automobile comportant un porte-balais (10) comportant un arbre rotor, au moins une première cage (13.1, 13.3) électriquement conductrice recevant un premier balai (15.1, 15.3) de première polarité, au moins une deuxième cage (13.2, 13.4) recevant un deuxième balai (15.2, 15.4) de deuxième polarité différente de la première polarité, au moins une platine de support (12) sur laquelle sont fixés la première (13.1, 13.3) et la deuxième (13.2, 13.4) cages, ladite platine de support (12) étant reliée électriquement à la deuxième polarité, et un organe (122, 40) sensible à la chaleur déformable à partir d'une température prédéterminée, ledit organe déformable (122, 40) est agencé pour isoler électriquement ladite première cage (13.1, 13.3) par rapport à ladite platine de support (12), suite à une déformation dudit organe déformable (122, 40), un contact entre ladite première cage (13.1, 13.3) et ladite platine de support (12) est établi, ledit organe déformable est formé par une couche (40) de matériau électriquement isolant recouvrant au moins en partie un système de fixation (31) de ladite première cage (13.1, 13.3) à ladite platine de support (12) et le démarreur comporte un moyen de déplacement (35) de ladite première cage de manière à établir le contact suite à la déformation.

2. Démarreur de véhicule selon la revendication 1, **caractérisé en ce que** le système de fixation (31) comporte au moins une patte (32) recouverte au moins en partie d'une couche (40) de matériau électriquement isolant.

3. Démarreur de véhicule selon l'une quelconque des revendications 1 et 2, **caractérisé en ce que** ledit moyen de déplacement (35) est formé par un ressort à spirale monté sur un système de maintien (37) dudit ressort (35) appartenant à ladite première cage (13.1, 13.3).

4. Démarreur de véhicule selon la revendication 3, **caractérisé en ce que** ledit système de maintien (37) est constitué par un pion issu d'une paroi de ladite première cage (13.1, 13.3).

5. Démarreur de véhicule selon l'une quelconque des revendications 1 à 4, **caractérisé en ce que** ledit organe déformable (122, 40) est réalisé dans un matériau plastique.

6. Démarreur de véhicule selon la revendication 5, **caractérisé en ce que** le matériau plastique est une matière thermoplastique telle qu'un polyamide PA4.6 ou PA6.6, ou un polypropylène PPS chargé en fibre de verre entre 40 et 50%.

7. Démarreur de véhicule selon la revendication 6, **caractérisé en ce que** le matériau plastique est une matière thermodurcissable.

8. Démarreur de véhicule selon l'une quelconque des revendications 1 à 7, **caractérisé en ce qu'**il comporte deux balais (15.1, 15.3) de première polarité et deux balais (15.2, 15.4) de deuxième polarité.

9. Démarreur de véhicule selon l'une quelconque des revendications 1 à 8, **caractérisé en ce que** la première polarité correspond à une polarité positive tandis que la deuxième polarité à laquelle est reliée électriquement ladite platine de support (12) correspond à une masse du démarreur.

## Patentansprüche

1. Kraftfahrzeuganlasser aufweisend einen Bürstenhalter (10) aufweisend eine Rotorwelle, mindestens einen elektrisch leitenden ersten Käfig (13.1, 13.3), der eine erste Büste (15.1, 15.3) erster Polarität aufnimmt, mindestens einen zweiten Käfig (13.2, 13.4), der eine zweite Bürste (15.2, 15.4) zweiter Polarität, die sich von der ersten Polarität unterscheidet, aufnimmt, mindestens eine Trägerplatte (12), auf welcher der erste (13.1, 13.3) und der zweite (13.2, 13.4) Käfig befestigt sind, wobei die Trägerplatte (12) mit der zweiten Polarität elektrisch verbunden ist, und ein wärmeempfindliches Element (122, 40), das ab einer vorbestimmten Temperatur verformbar ist, wobei das verformbare Element (122, 40) angeordnet ist, den ersten Käfig (13.1, 13.3) bezogen auf die Trägerplatte (12) elektrisch zu isolieren, nach einer Verformung des verformbaren Elements (122, 40) wird ein Kontakt zwischen dem ersten Käfig (13.1, 13.3) und der Trägerplatte (12) hergestellt, verformbare Element durch von einer Schicht (40) aus elektrisch isolierendem Material gebildet ist, die ein System zur Befestigung (31) des ersten Käfigs (13.1, 13.3) an der Trägerplatte (12) wenigstens teilweise abdeckt, und der Anlasser aufweist ein Mittel zum Bewegen (35) des ersten Käfigs, um den Kontakt nach der Verformung herzustellen.

2. Fahrzeuganlasser nach Anspruch 1, **dadurch gekennzeichnet, dass** das Befestigungssystem (31) mindestens eine Klaue (32) aufweist, die wenigstens teilweise von einer Schicht (40) aus elektrisch isolierendem Material bedeckt ist.

3. Fahrzeuganlasser nach einem der Ansprüche 1 und 2, **dadurch gekennzeichnet, dass** das Bewegungsmittel (35) von einer Spiralfeder gebildet ist, die auf einem System zum Halten (37) der Feder (35) angebracht ist, das zum ersten Käfig (13.1, 13.3) gehört.

4. Fahrzeuganlasser nach Anspruch 3, **dadurch gekennzeichnet, dass** das Haltesystem (37) von einem Stift aus einer Wand des ersten Käfigs (13.1, 13.3) gebildet ist.

5. Fahrzeuganlasser nach einem der Ansprüche 1 bis 4, **dadurch gekennzeichnet, dass** das verformbare Element (122, 40) aus einem Kunststoff hergestellt ist.

6. Fahrzeuganlasser nach Anspruch 5, **dadurch gekennzeichnet, dass** der Kunststoff ein thermoplastisches Material, wie beispielsweise ein Polyamid PA4.6 oder PA6.6, oder ein zwischen 40 und 50 % glasfasergefülltes Polypropylen PPS ist.

7. Fahrzeuganlasser nach Anspruch 6, **dadurch gekennzeichnet, dass** der Kunststoff ein wärmehärtbares Material ist.

8. Fahrzeuganlasser nach einem der Ansprüche 1 bis 7, **dadurch gekennzeichnet, dass** er zwei Bürsten (15.1, 15.3) erster Polarität und zwei Bürsten (15.2, 15.4) zweiter Polarität aufweist.

9. Fahrzeuganlasser nach einem der Ansprüche 1 bis 8, **dadurch gekennzeichnet, dass** die erste Polarität einer positiven Polarität entspricht, während die zweite Polarität, mit der die Trägerplatte (12) elektrisch verbunden ist, einer Masse des Anlassers entspricht.

## Claims

1. Motor vehicle starter comprising a brush holder (10) comprising a rotor shaft, at least one first electrically conductive cage (13.1, 13.3) receiving a first brush (15.1, 15.3) of first polarity, at least one second cage (13.2, 13.4) receiving a second brush (15.2, 15.4) of second polarity different from the first polarity, at least one support plate (12) to which the first (13.1, 13.3) and the second (13.2, 13.4) cages are fixed, said support plate (12) being linked electrically to the second polarity, and a heat-sensitive member (122, 40) that is deformable from a predetermined temperature, said deformable member (122, 40) is arranged to electrically isolate said first cage (13.1, 13.3) with respect to said support plate (12), following a deformation of said deformable member (122, 40), a contact between said first cage (13.1, 13.3) and said support plate (12) is established, said deformable member is formed by a layer (40) of electrically insulating material at least partly covering a fixing system (31) for fixing said first cage (13.1, 13.3) to said support plate (12) and the starter comprises a displacement means (35) for displacing said first cage so as to establish the contact following the deformation.

2. Vehicle starter according to Claim 1, **characterized in that** the fixing system (31) comprises at least one lug (32) at least partly covered by a layer (40) of electrically insulating material.

3. Vehicle starter according to either one of Claims 1 and 2, **characterized in that** said displacement means (35) is formed by a spiral spring mounted on a securing system (37) for said spring (35) belonging to said first cage (13.1, 13.3).

4. Vehicle starter according to Claim 3, **characterized in that** said securing system (37) consists of a pin stemming from a wall of said first cage (13.1, 13.3).

5. Vehicle starter according to any one of Claims 1 to 4, **characterized in that** said deformable member (122, 40) is produced in a plastic material.

6. Vehicle starter according to Claim 5, **characterized in that** the plastic material is a thermoplastic material such as a PA4.6 or PA6.6 polyamide, or a PPS polypropylene filled between 40 and 50% with glass fibre.

7. Vehicle starter according to Claim 6, **characterized in that** the plastic material is a thermosetting material.

8. Vehicle starter according to any one of Claims 1 to 7, **characterized in that** it comprises two brushes (15.1, 15.3) of first polarity and two brushes (15.2, 15.4) of second polarity.

9. Vehicle starter according to any one of Claims 1 to 8, **characterized in that** the first polarity corresponds to a positive polarity whereas the second polarity to which said support plate (12) is electrically linked corresponds to a ground of the starter.
